# EUROPÄISCHE PATENTSCHRIFT

(11) **EP 4 268 963 B1**
(45) Veröffentlichungstag und Bekanntmachung des Hinweises auf die Patenterteilung: **13.11.2024**
(21) Anmeldenummer: 22170089.1
(22) Anmeldetag: 26.04.2022
(51) Int. Cl.: B02C 19/00, H01M 4/04, B02C 17/18, B02C 25/00, B02C 21/00, H01M 4/139, H01M 10/0525

(54) **VERFAHREN UND ANORDNUNG ZUR GROSSTECHNISCHEN HERSTELLUNG EINER SUSPENSION FÜR EINE BATTERIE**
METHOD AND ASSEMBLY FOR THE INDUSTRIAL PRODUCTION OF A SUSPENSION FOR A BATTERY
PROCÉDÉ ET DISPOSITIF DE FABRICATION À L'ÉCHELLE INDUSTRIELLE D'UNE SUSPENSION POUR UNE BATTERIE

(43) Veröffentlichungstag der Anmeldung: 01.11.2023
(73) Patentinhaber: Siemens Aktiengesellschaft, 80333 München (DE)
(72) Erfinder: Arzberger, Arno, 96135 Stegaurach (DE); Baldauf, Manfred, 91056 Erlangen (DE); Otte, Clemens, 81739 München (DE); Runkler, Thomas, 81929 München (DE); Steinbacher, Frank, 90542 Eckental (DE); Weber, Marc Christian, 80339 München (DE); Witt, Jonas, 96050 Bamberg (DE)
(74) Vertreter: Siemens Patent Attorneys

(56) Entgegenhaltungen:
- WO-A1-2007/124981
- CN-U- 209 362 610
- AUGUSTINE B MAKOKHA ET AL: "Multivariate approach to on-line prediction of in-mill slurry density and ball load volume based on direct ball and slurry sensor data", MINERALS ENGINEERING, ELSEVIER, AMSTERDAM, NL, vol. 26, 12 October 2011 (2011-10-12), pages 13 - 23, XP028450642, ISSN: 0892-6875, [retrieved on 20111021], DOI: 10.1016/J.MINENG.2011.10.009

## Beschreibung

Die Erfindung betrifft ein Verfahren zur großtechnischen Herstellung einer Suspension für eine Batterie gemäß dem Oberbegriff des Patentanspruchs 1, und eine Anordnung zur großtechnischen Herstellung einer Suspension für eine Batterie gemäß dem Oberbegriff des Patentanspruchs 13.

Hersteller von Batteriezellen suchen durch den weltweit wachsenden Bedarf an z.B. Lithium-Ionen Batterien nach Wegen zur Ausweitung ihrer Produktionsmengen. Insbesondere die Batterien batterielektrischer Kraftfahrzeuge erfordern nicht nur bezüglich Stückzahlen, sondern auch bezüglich der absoluten Menge der Werkstoffe immer höheren Bedarf an Fertigungskapazitäten. Dabei sind sie mit zwei Herausforderungen konfrontiert:
- Eine Steigerung der Produktionskapazität kann entweder durch quantitative Skalierung aktueller Produktionsmaschinen oder durch qualitative Veränderungen des Prozesses erreicht werden. Letztere Variante ist für Hersteller attraktiver, da effizientere Verfahrensschritte beidseitig Produktionskapazität und Kosteneffizienz steigern.
- Aufgrund der hohen Ausschussraten und der in Teilen unbekannten Effektbeziehungen innerhalb der Produktion sind besonders solche Prozessanpassungen von Bedeutung, welche die Qualitätsschwankungen innerhalb der Produktion minimieren.

Die Druckschrift CN 209 362 610 U zeigt eine Anordnung zum Kugelmahlen von Anodenmaterial für Lithium-Ionen-Batterien, bei der durch eine exzentrisch gelagerte Innentrommel eine höhere Effizienz des Mahlvorgangs und der Lebensdauer der Mahlkugeln erreicht werden soll.

In der Industrie ist das Kugelmahlen und -mischen von Aktivmaterial, Bindemitteln/ Additiven zu Beginn der Elektrodenfertigung als Batchprozess etabliert, das heißt, dass immer eine definierte Menge von Eingangsmaterial in einem Durchgang verarbeitet und danach ausgegeben wird. Der Durchsatz ist im Wesentlichen durch die Anzahl an Mischlinien quantitativ skalierbar. Zusätzlich unterscheiden sich die sog. Batches hinsichtlich ihrer Qualität. Das kontinuierliche Kugelmahlen - hier wird kontinuierlich Eingangsmaterial zugeführt und verarbeitetes Ausgangsmaterial ausgegeben - hingegen liefert sowohl höheren Durchsatz als auch - theoretisch - reduzierte Qualitätsschwankungen der damit hergestellten Elektrodenpaste - im Folgenden auch Suspension oder "Slurry" (engl.: Schlamm) genannt - durch den kontinuierlichen Materialstrom. Die Suspension ist dabei eine Aktivpaste, welche nach dem Mischen auf die Elektrodenfolien aufgetragen bzw. extrudiert wird. Allerdings wird das kontinuierliche Kugelmahlen in der großtechnischen Praxis nicht angewendet, weil die Regelung des Prozesses aufgrund der langen Dauer von Qualitätsmessungen des fertigen Produktes schwierig ist.

Um die Vorteile eines kontinuierlichen Kugelmahlens und Mischens in der Praxis nutzen zu können, braucht es nämlich eine präzise Regelung der Prozesskenngrößen, um fortwährend Slurry in gleichbleibender Qualität auszugeben. Diese Regelung wird erschwert durch eine Vielzahl von Einflussparametern, von welchen einige nicht online (also während des produktiven großtechnischen Fertigungsprozesses) messbar und nur unzureichend simulierbar sind: z.B. der Verschleißfortschritt der Mahlkugeln, ihre Temperaturbeständigkeit und verbleibende Mahlkraft. Hinzu kommt, dass die Qualität des Slurrys ein multidimensionales Merkmal ist, wovon wiederum einige Faktoren nicht online messbar sind: z.B. seine Viskosität, seine Körnung und die Verteilung von Festkörperanteilen. Die "online"-Messung dieser Größen scheitert an der Verfügbarkeit geeigneter Messmittel und -methoden, die dies in kürzester Zeit und/oder zu vertretbaren Kosten leisten können.

Die Druckschrift WO 2020/216491 A1 - Dreger "Verfahren zur Herstellung einer Batterie" zeigt ein Verfahren zur Herstellung einer Suspension (Elektrodenpaste) einer Batterie, insbesondere für die Batterie eines batterieelektrischen Kraftfahrzeuges, bei dem ein Extruder mit der Suspension anhand einer während des Extrusionsvorganges auf die Suspension einwirkenden spezifischen Energie in Korrelation zur Füllmenge des Extruders gesteuert wird. Dieses Verfahren ist aber u.a. aus den oben genannten Gründen nicht für das Kugelmahlen nutzbar, so dass in der großtechnischen Anwendung das Kugelmahlen nach wie vor regelmäßig im "Batchbetrieb", also chargenweise, erfolgt.

Die Druckschrift WO 2007/124981 A1 - Becker et al. "VERFAHREN ZUM BETRIEB EINES MÜHLENSYSTEMS" zeigt die Modellierung eines Mahlvorgangs, wobei im operativen Betrieb anhand von Messungen die Parameter des Modells für zukünftige Einsätze des Modells adaptiert werden.

Die Publikation AUGUSTINE B MAKOKHA ET AL: "Multivariate 1-13 approach to on-line prediction of in-mill slurry density and ball load volume based on direct ball and slurry sensor data" zeigt ein Verfahren zur Vorhersage des Mahlergebnisses anhand multivarianter Modelle.

Kontinuierliches Kugelmahlen und -mischen wird bislang primär im Labor-/Pilotrahmen erprobt. In der Industrie dominieren wie erwähnt batchorientierte Verfahrensschritte. Das Mahlen der Aktivmaterialien und Mischen der Rohmaterialien wird dabei über sog. Rezepte gesteuert. Diese hinterlegen für eine bestimmte Zellchemie sowohl Inhaltsstoffe als auch Verfahrensabläufe (z.B. Dauer, Temperatur, Rotationsgeschwindigkeit der Mischtrommel). Maschinenführer können aufgrund ihres Erfahrungswissens (und mithilfe laboranalytischer Untersuchungen der Eingangs- bzw. Rohmaterialien) lenkend in den Prozess eingreifen.

Mischlinien in der Industrie sind nur mit rudimentärer Sensorik ausgestattet, welche keine online-Messung der Slurry-Qualität erlaubt. Rezepte werden in der Regel in Pilotanlagen validiert und durch stichprobenartige Laborproben im laufenden Prozess überwacht.

Kontinuierliches Kugelmahlen und -mischen ist in den chemischen Verfahrensweisen ein aktives Forschungsfeld. Dazu finden sich in der Literatur der vergangenen Jahre experimentelle Laborstudien, welche das kontinuierliche Mischen für spezifische pharmazeutische Anwendungen erproben und geeignete Sensorik (z.B. Nahinfrarotspektroskopie NIRS) explorieren.

Die Publikation Aditya U. Vanarase, Manel Alcalà, Jackeline I. Jerez Rozo, Fernando J. Muzzio, and Rodolfo J. Romañach. Real-time monitoring of drug concentration in a continuous powder mixing process using NIR spectroscopy. Chemical Engineering Science, 65(21):5728-5733, 2010 zeigt einen solchen Ansatz.

Diese Studien betrachten dabei die homogene Vermengung chemischer Wirkstoffe und unterscheiden sich von der vorliegenden Erfindung in drei wesentlichen Punkten:
a) Es wird die Konzentration eines Inhaltsstoffes über den Fortgang des Mischprozesses geschätzt. Dabei erfolgt keine Rückkopplung an die Kenngrößen des Prozesses selbst (im Sinne einer Steuerung).
b) Es wird ein einziger, objektiv messbarer Parameter vorhergesagt (Wirkstoffkonzentration), im Gegensatz zur Slurry-Qualität als multidimensionales und latentes Kriterium.
c) Die chemischen Ausgangsmaterialien sind bereits gemahlen; die Komplexität durch den allmählichen Verschleiß der Mahlkugeln entfällt.

Mischvorgänge in Kugelmühlen sind in der Prozessindustrie ein verbreiteter Prozess, z.B. Zementherstellung. Dabei wird aber keine online Sensorik mit Feedbackschleife eingesetzt, da viele Produktparameter (Mahlgrad, Homogenität des Mahlguts, Partikelgrößenverteilung, ...), aber auch einige Prozessparameter (Abnutzung der Kugeln) im Prozess nicht gemessen werden können. Wenn in solchen Anwendungsfällen Qualitätsschwankungen nicht ins Gewicht fallen, wird das Kugelmahlen / Kugelmischen dort auch im kontinuierlichen Verfahren eingesetzt. Wegen der Qualitätsanforderungen bei der Batteriefertigung wird das Kugelmahlen / Kugelmischen dort im großtechnischen Maßstab nur im Batchbetrieb mit definierten Ausgangsbedingungen (z.B. pro Batch neue Mischkugeln, festgelegte Mengen und Kondition der Ausgangsstoffe, konstante Umgebungsbedingungen etc.) eingesetzt.

Es ist daher eine Aufgabe der vorliegenden Erfindung, bestehende Verfahren und Anordnungen zum Kugelmahlen so anzupassen, dass in einem kontinuierlichen Fertigungsprozess Suspensionen, insbesondere für Elektroden der Batterien von BEV (batterieelektrischen Kraftfahrzeugen), in gleichbleibend hoher Qualität hergestellt werden können.

Die Aufgabe wird durch das Verfahren nach Patentanspruch 1 und durch die Anordnung nach Patentanspruch 13 gelöst.

Dabei wird ein Verfahren zur großtechnischen Herstellung einer Suspension für eine Batterie, insbesondere für einen Elektrolyten eines Lithium-Ionen-Akkus, in einer Fertigungsanlage vorgeschlagen, wobei zumindest ein Eingangsmaterial mittels Kugelmahlens in zumindest einer mit Mahlkugeln versehenen rotierenden Kammer verarbeitet (gemahlen und ggf. gemischt) und ein resultierendes Ausgangsmaterial (Zwischenprodukt) mittels einer nachfolgenden Verarbeitungseinheit mit einer Anzahl anderer Materialien gemischt und ausgebracht wird. Dabei erfolgt das Kugelmahlen als ein kontinuierlicher Prozess mit einer kontinuierlich gesteuerten Zugabe des zumindest einen Eingangsmaterials und mit einer kontinuierlich gesteuerten Abgabe des verarbeiteten Ausgangsmaterials bzw. eines Zwischenproduktes an die nachfolgende Verarbeitungseinheit, wobei bei der Herstellung der Suspension als erste Parameter Zustandsparameter des Eingangsmaterials und eine Anzahl Prozessparameter der Fertigungsanlage erfasst werden, wobei zumindest in einer Lernphase bei der Herstellung als zweite Parameter Ergebnisse von Laboranalysen über einen Zustand oder eine Qualität zumindest der gefertigten Suspension und ggf. auch des Zwischenproduktes erfasst werden, wobei in der Lernphase die ersten und die zweiten Parameter zum Trainieren eines Modells zur Vorhersage des Zustandes oder der Qualität mittels eines maschinellen Lernens verwendet werden, und wobei zumindest außerhalb der Lernphase mittels der ersten Parameter und des trainierten Modells die Einrichtung zum Kugelmahlen gesteuert oder geregelt wird. Die Nutzung des somit gebildeten "Soft Sensors" für die erreichbare Qualität innerhalb des Regelungssystems erlaubt eine geschlossene Steuerung bzw. Regelung des Mahl- und Mischprozesses in der Einrichtung zum Kugelmahlen bzw. -mischen als ein kontinuierlicher Prozess, wobei Prozesskenngrößen so adaptiert werden, dass die Qualitätsmerkmale des austretenden Slurrys konstant gehalten werden.

Die Aufgabe wird außerdem durch eine Vorrichtung zur großtechnischen Herstellung einer Suspension für eine Batterie, insbesondere für eine Elektrode eines Lithium-Ionen-Akkus, in einer Fertigungsanlage gelöst, wobei eine Einrichtung zum Kugelmahlen zur Verarbeitung zumindest eines Eingangsmaterials in zumindest einer mit Mahlkugeln versehenen rotierenden Kammer vorgesehen ist. Dabei ist die Einrichtung zum Kugelmahlen dazu eingerichtet, das Kugelmahlen als ein kontinuierlicher Prozess mit einer kontinuierlich gesteuerten Zugabe des zumindest einen Eingangsmaterials und mit einer kontinuierlich gesteuerten Abgabe des verarbeiteten Ausgangsmaterials an eine nachfolgende Verarbeitungseinheit durchzuführen, wobei erste Sensoren zur Erfassung von Zustandsparametern des Eingangsmaterials und einer Anzahl Prozessparameter der Fertigungsanlage als erste Parameter bei der Herstellung der Suspension vorgesehen sind, wobei zumindest in einer Lernphase zweite Sensoren und/oder zumindest eine Analyseeinrichtung zur Erfassung eines Zustandes oder Qualität zumindest der gefertigten Suspension vorgesehen sind, wobei eine Recheneinrichtung zum Trainieren eines Modells zur Vorhersage des Zustandes oder der Qualität mittels eines maschinellen Lernens anhand der ersten und der zweiten Parameter in der Lernphase vorgesehen ist, und wobei eine Steuerungseinrichtung vorgesehen ist, die zur Steuerung oder Regelung der Einrichtung zum Kugelmahlen mittels der ersten Parameter und des trainierten Modells zumindest außerhalb der Lernphase eingerichtet ist. Damit lassen sich die anhand des Verfahrens diskutierten Vorteile erreichen.

Vorteilhafte Ausgestaltungen des Verfahrens sind in den abhängigen Patentansprüchen angegeben. Die Merkmale und Vorteile können sowohl einzeln als auch in sinnfälliger Kombination realisiert werden. Die im Zusammenhang mit dem Verfahren offenbarten Merkmale und Vorteile gelten sinngemäß auch für die erfindungsgemäße Vorrichtung.

Die Recheneinrichtung und die Steuerungseinrichtung können in einer Ausführungsvariante auch identisch sein.

Vorteilhaft wird für das maschinelle Lernen ein Supervised-Lernen oder ein Reinforcement-Lernen verwendet. Damit ist nach Abschluss des Lernvorgangs eine gute Abschätzung der Eigenschaften (Qualität) des Endproduktes und je nach Ausführungsform auch des Zwischenproduktes abschätzbar. Zudem lassen sich die damit erzeugten Modelle auch im operativen Betrieb weiter verbessern, z.B. durch Nachtrainieren mittels aufgezeichneter Prozessparameter und stichprobenartiger Analysen des dabei hergestellten Produktes. Sofern das Reinforcement-Lernen verwendet wird, wird darin vorteilhaft eine Belohnungsfunktion verwendet, die auf eine Belohnung einer möglichst geringen Abweichung zwischen dem vorhergesagten und dem tatsächlichen Zustand oder Qualität zumindest der gefertigten Suspension gerichtet ist.

Ein wesentlicher Einflussfaktor auf die Qualität wird berücksichtigt, indem als einer der Prozessparameter ein Verschleißgrad der Mahlkugeln verwendet wird. Wenn dabei der Verschleißgrad aus einer Benutzungshistorie der Mahlkugeln errechnet wird, entfällt die Notwendigkeit zur wiederholten messtechnischen Analyse der Kugeln während des Betriebs.

Vorteilhaft wird einer der Prozessparameter eine Rotationsgeschwindigkeit der Einrichtung zum Kugelmahlen verwendet, weil damit sowohl die Qualität bzw. die Eigenschaften des Produktes beeinflusst werden, als auch der Verschleiß der Mahlkugeln.

Materialeigenschaften des Mahlgutes können indirekt erfasst werden, indem als einer der Prozessparameter eine Energieaufnahme oder ein erforderliches Antriebsdrehmoment der Einrichtung zum Kugelmahlen verwendet wird. Dabei können diese Werte auch hinsichtlich von Schwankungen ausgewertet werden.

Die Vorhersage und damit die Präzision der Steuerung der Produktionseinrichtung kann erhöht werden, indem als einer der Prozessparameter ein Kontextparameter aus der Einrichtung zum Kugelmahlen verwendet wird. Als der Kontextparameter werden bevorzugt auch Schallemissionen und ggf. Videobilder aus einer Mischkammer der Einrichtung zum Kugelmahlen ausgewertet und verwendet.

Vorteilhaft wird die Suspension durch die nachfolgende Verarbeitungseinheit, insbesondere durch einen Extruder, zu einem Rohling für eine Elektrode geformt. Am Ausgang des Extruders können sowohl während der Lernphase Materialproben für laboranalytische Untersuchungen als auch im operativen Betrieb einfach erfassbare Parameter gewonnen werden, die als "Feedback" der Steuerung und damit auch als Eingangswerte für das gelernte Modell (künstliche Intelligenz) dienen.

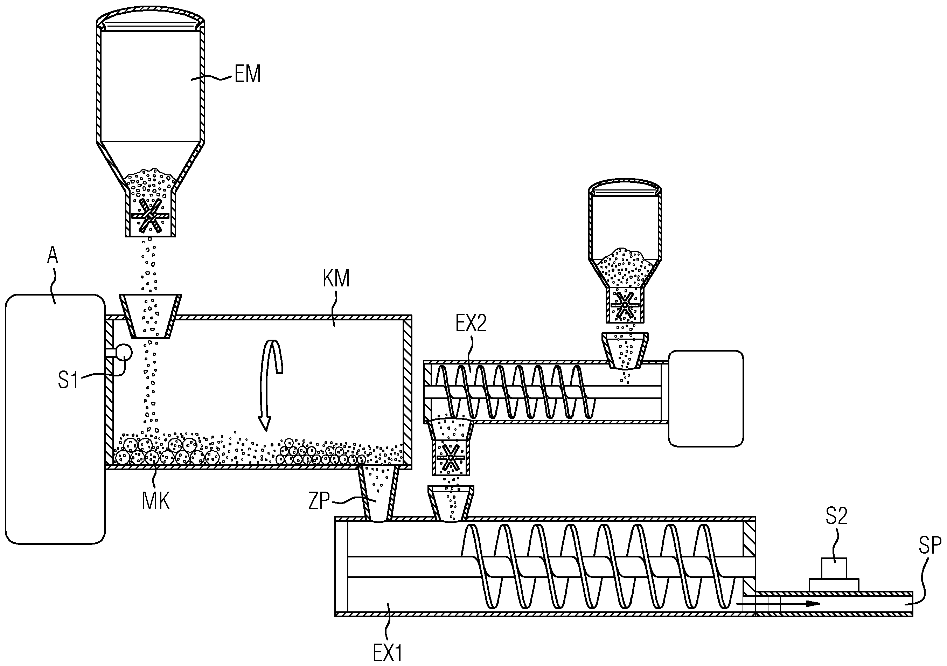

Ein Ausführungsbeispiel des erfindungsgemäßen Verfahrens wird nachfolgend anhand der Zeichnung erläutert. Es dient gleichzeitig zur Erläuterung einer erfindungsgemäßen Vorrichtung.

Dabei zeigt die einzige Figur schematisch eine Anordnung mit einer Einrichtung zum Kugelmahlen und zwei Extrudern.

Die Figur zeigt eine Anordnung aus einer Einrichtung zum Kugelmahlen KM und zwei Extrudern EX1, EX2. Eingangsmaterialien EM werden der Kugelmühle KM ("Einrichtung zum Kugelmahlen") zugeführt. Deren Ausgangsstrom besteht aus dem Zwischenprodukt ZP, welches in diesem Beispiel zusammen mit einem Ausgangsprodukt des Extruders EX2 dem Extruder EX1 zugeführt wird. Dessen Ausgangsstrom besteht aus der fertigen Suspension SP (kurz: Slurry), die in Form eines Rohlings einer Elektrode stranggepresst (extrudiert) ist.

Die Fertigungsanlage, insbesondere die Kugelmühle KM ist mit erster Sensorik S1 zur Überwachung und Steuerung bzw. Regelung des operativen (regulären) Betriebs ausgestattet; in der Figur ist für die Sensorik S1 exemplarisch ein Mikrofon in der Mahltrommel dargestellt. Mit dieser ersten Sensorik S1 werden erste Parameter des Zustandes (Temperatur, Körnung, Massefluss des Zustroms etc.) der Eingangsmaterialen EM erfasst. Zu den ersten Parametern gehören aber auch Prozessparameter der Fertigungsanlage, insbesondere der Kugelmühle KM (beispielsweise Rotationsgeschwindigkeit; Lebensalter, Menge und Größe der Mahlkugeln MK; Temperatur; Füllgrad der Trommel; erforderliche Leistung oder Drehmoment / Drehmomentverlauf des Antriebs A) sowie Kontextparameter (z.B. Audioaufnahmen aus der Mahltrommel; Schwankungen ("Ripple") des Antriebsmomentes; Vibrationen; Videobilder). Ebenso sind nicht messbare Eigenschaften des Eingangsmaterials EM, beispielsweise Herkunft/Lieferant, Lagerdauer etc. Teil der ersten Parameter. Einige Sensoren der ersten Sensorik S1 können auch anderweitig platziert sein, beispielsweise können diese am Ausgang des Extruders EX1 fortlaufend Eigenschaften des extrudierten Materials (Suspension SP - "Slurry") erfassen, z.B. Parameter des Fließverhaltens (Druck, Dispersion). Es ist dabei anzumerken, dass die Sensorik S1 im laufenden regulären Betrieb fortwährend und zeitnah ("online") arbeitet.

Die Fertigungsanlage ist weiterhin zumindest temporär mit zweiter Sensorik S2 ausgestattet bzw. eine solche wird insbesondere in einer Lernphase extern beigestellt bzw. hinzugezogen. Dabei handelt es sich beispielsweise um (Einrichtungen für) Laboranalysen, insbesondere des fertigen Produktes, also der Suspension SP. Diese zweite Sensorik S2 steht im operativen Betrieb entweder garnicht oder nur für Stichproben zur Verfügung oder ist zumindest so langsam/träge, dass deren Werte nicht zur closed-loop-Regelung einsetzbar sind. Die damit erfassten zweiten Parameter betreffen also in erster Linie die Qualität des fertigen Produktes SP. Dazu können beispielsweise eine Hyperspektralanalyse oder eine Nahinfrarotspektroskopie eingesetzt werden. Auch andere mechanische (z.B. Zähigkeit, Bruchfestigkeit) oder chemische oder elektrische Eigenschaften zählen zu den zweiten Parametern.

In einer Ausführungsform können zumindest einige der ersten und auch der zweiten Parameter auch oder gar ausschließlich am Zwischenprodukt ZP erfasst werden. Dies gilt insbesondere, wenn ein zweiter Extruder EX2 mit weiteren Materialien nicht eingesetzt wird und der erste Extruder EX1 lediglich dem Auspressen der Suspension SP und nicht dem Zumischen der weiteren Materialien dient und somit kaum Einfluss auf wesentliche Produkteigenschaften hat.

Die zweiten Parameter sind wichtige Regelgrößen zur Steuerung der Fertigungsanlage, insbesondere der Kugelmühle KM und des Zu- und Abflusses der Kugelmühle KM. Sie stehen aber nicht ständig und auch oft nicht zeitnah zur Verfügung. Es ist daher notwendig, diese zweiten Parameter mittels eines Modells bereitzustellen, d.h., die zweite Sensorik S2 soll für den operativen Betrieb mittels des in der Trainingsphase parametrierten Modells ersetzt werden, welches zeitnah die geforderten zweiten Parameter liefert. Man spricht dabei auch von einem "Soft Sensor" oder "virtuellen Sensor".

Dazu ist die Fertigungsanlage mit einer Rechenvorrichtung, beispielsweise einer industriellen Steuerung (in der Figur nicht dargestellt) mit einem neuralen Prozessor ausgestattet, in dem beispielsweise in Gestalt eines trainierten neuronalen Netzes das Modell gespeichert ist bzw. verarbeitet wird. Dieses wird mit den im laufenden Betrieb verfügbaren Sensorwerten der ersten Sensorik und den sonstigen ersten Parametern angesteuert und liefert gemäß seiner Parametrierung die zweiten Parameter zurück, nämlich die vorhergesagte Qualität der fertigen Suspension SP.

Zum Trainieren (auch Parametrieren genannt) des Modells wird ein "Supervised Learning" oder ein "Reinforcement Learning" eingesetzt, also etablierte Verfahren der künstlichen Intelligenz. Das Trainieren kann in der beschriebenen Rechenvorrichtung (v.a. der industriellen Steuerung) stattfinden. Das Modell kann aber auch extern trainiert werden. Von Zeit zu Zeit kann das Modell mittels Laboranalysen von Stichproben, also mittels zweiter Sensorik S2, kontrolliert bzw. verfeinert (nachtrainiert) werden. Zum (Nach-)Training werden ggf. aufgezeichnete ("geloggte") Daten der ersten Parameter mit den zweiten Parametern, die später anhand des dabei gefertigten Materials gewonnen werden, in Bezug gesetzt und damit das Modell trainiert bzw. verfeinert. Das heißt, dass auch langwierige Analysen der Suspension möglich sind, weil deren Ergebnisse zum Trainieren des Modells nicht bereits während des Betriebs zur Verfügung stehen müssen, sondern mit den aufgezeichneten ("geloggten") Fertigungsdaten in Bezug gesetzt werden. Das dabei trainierte Modell ist hingegen im operativen Betrieb in der Lage, "online" und dabei nahezu verzögerungsfrei eine Vorhersage der Qualität bzw. der Eigenschaften des gerade produzierten Materials zu liefern, was eine geschlossene Regelungsstrecke ("closed loop") ermöglicht, so dass anstelle eines "batch-basierten" (chargen-basierten) Fertigungsprozesses ein kontinuierlicher Fertigungsprozess ermöglicht wird. Dabei können auch weitere Parameter abgeschätzt und in das Modell einbezogen werden, insbesondere der Verschleißgrad der Mahlkugeln MK.

Das beschriebene Verfahren nutzt Methoden des ,Supervised Learning`, um ein Prädiktionsmodell zur Online-Schätzung der Slurry-Qualität im Mahl- und Mischprozess der Elektrodenfertigung abzuleiten. Dabei fließen unter anderem die Prozesskenngrößen als Zeitreihen (z.B. Rotationsgeschwindigkeit, Anzahl und Lebensalter der Mahlkugeln), Kontextparameter (z.B. Audioaufnahmen und Vibrationen der Mischtrommel, Umgebungstemperatur) als auch die Charakteristika der Rohmaterialien EM (z.B. Laboranalysen, Herkunft, Lagerdauer, Temperatur bei Einfüllung) ein.

Während des Modelltrainings und ggf. zu späteren Zeitpunkten (Qualitätskontrolle, Nach-training) wird die Qualität des Slurrys laboranalytisch bestimmt. Die Analysen hierfür können die Sollwerte "guter" Slurrys auf den in der Produktion zur Qualitätserfassung verfügbaren Online-Sensoren enthalten. Darüber hinaus können aufwendigere Laboranalysen, welche nicht online innerhalb der Produktion implementiert sind, zur Bestimmung der Slurry-Qualität verwendet werden. Beispielsweise werden visuelle Informationen (z.B. das Spektrum) oder Fließeigenschaften (z.B. Dispersion, Viskosität) für Slurrys guter Qualität erfasst.

In der regulären, großtechnischen Produktion können ausschließlich online messbare Parameter erfasst werden (z.B. das Spektrum des aus dem Mischprozess ausfließenden Slurrys, oft aber z.B. keine Dispersion oder Viskosität oder dgl.). Diese werden entweder direkt mit den Vergleichswerten guter Slurrys aus dem Laborsetting verglichen bzw. mithilfe des beschriebenen Soft Sensors mit aufwändigeren laboranalytischen Messungen in Beziehung gesetzt.

Dieses Online-Qualitätsmodell wird im nächsten Schritt zur fortwährenden Prognose der Slurry-Qualität im Kugelmahlen und Mischen (z.B. direkt in der Kugelmühle oder im Extruder EX1) eingesetzt. Mithilfe von Methoden beispielsweise des Reinforcement Learning` wird eine Regelpolicy (Regelvorschrift) der Produktionsparameter (z.B. Rotationsgeschwindigkeit, Zugabe neuer Mahlkugeln, Lösungsmittelmenge, Additive) gelernt, welche die durch das Prädiktionsmodell vorhergesagte Slurry-Qualität an die Sollwerte der Qualitätsdimensionen angleicht.

Die Regelung kann dabei mittels Bildschirmausgaben o.ä. als Assistenz für die/den MaschinenführerIn fungieren, oder als closed-loop-Steuerung autonom in den Prozess eingreifen. Mischformen sind möglich.

Kugelmahlen und Mischen ist als Batchprozess primär durch die Anschaffung neuer Linien/Maschinen skalierbar. Kontinuierliches Mahlen und Mischen bietet durch die Anpassung der Produktionskennparameter (z.B. Rotationsgeschwindigkeit) eine effizientere Skalierung der Produktionskapazitäten. Auch kann damit der Durchsatz flexibler gesteuert werden.

Durch den kontinuierlichen Materialausstrom werden die Qualitätsschwankungen zwischen Batches eliminiert, was den Produktionsprozess stabilisiert und Ausschussraten senkt.

Durch die Nutzung eines Soft Sensor Konzepts können leicht verfügbare online Messungen im Produktionsprozess zur Live-Qualitätsbewertung des austretenden Slurrys verwendet werden. Das spart Kosten für teure Messinstrumente an jeder Linie. Solche Qualitätsbewertungen, welche bislang nur über laboranalytische Messungen gewonnen werden und nicht online (auch nicht mit teurer Sensorik) durchgeführt werden können, stehen über den Soft Sensor trotzdem online (zeitnah) zur Verfügung.

Die Nutzung des Soft Sensors innerhalb eines Regelungssystems erlaubt eine geschlossene Steuerung des Mahl- und Mischprozesses, welches Prozesskenngrößen so adaptiert, dass die Qualitätsmerkmale des austretenden Slurrys konstant und in der erforderliche Höhe gehalten werden.

Der Soft Sensor und das aufbauende Regelungssystem erweitern die verfügbaren Automatisierungslösungen für die Elektrodenproduktion. Ein Soft Sensor kann zur Vorhersage der Slurry-Qualität in die Qualitätsüberwachung des Produktionsprozesses integriert werden. Eine autonome Regelungstechnik stärkt die Prozesssteuerung und erlaubt die Einbindung datengetriebener Optimierung in bestehende Automatisierungslösungen.

Die informationstechnischen Methoden zum Erlernen eines Soft Sensors oder einer Regelpolicy basierend auf Sensordaten sind bekannte Methoden des Machine-Learning, also der künstlichen Intelligenz. Neu ist jedoch die Anwendung auf das kontinuierliche Kugelmahlen und Mischen. Insbesondere die Berücksichtigung des Kugelverschleiß als Teil der Prozesskenngrößen, die multidimensionale Beschreibung der Slurry Qualität (Viskosität, Verteilung von Festkörperanteilen, Feuchtigkeitsanteil, ...) in einem einzigen Soft Sensor und der Verzicht auf Spezialsensorik im operativen Betrieb sind die wesentlichen Kernaspekte der vorliegenden Lösung.

## Patentansprüche

1. Verfahren zur großtechnischen Herstellung einer Suspension (SP) für eine Batterie, insbesondere für eine Elektrode eines Lithium-Ionen-Akkus, in einer Fertigungsanlage,
wobei zumindest ein Eingangsmaterial (EM) mittels Kugelmahlens in zumindest einer mit Mahlkugeln (MK) versehenen rotierenden Kammer einer Einrichtung (KM) zum Kugelmahlen verarbeitet und das Ausgangsmaterial (ZP) mittels einer nachfolgenden Verarbeitungseinheit (EX1) mit einer Anzahl anderer Materialien gemischt und ausgebracht wird,
**dadurch gekennzeichnet,**
**dass** das Kugelmahlen als ein kontinuierlicher Prozess mit einer kontinuierlich gesteuerten Zugabe des zumindest einen Eingangsmaterials (EM) und mit einer kontinuierlich gesteuerten Abgabe des verarbeiteten Ausgangsmaterials (ZP) an eine nachfolgende Verarbeitungseinheit (EX1) erfolgt,
**dass** bei der Herstellung der Suspension (SP) als erste Parameter Zustandsparameter des Eingangsmaterials (EM) und eine Anzahl Prozessparameter der Fertigungsanlage erfasst werden,
**dass** zumindest in einer Lernphase bei der Herstellung als zweite Parameter Ergebnisse von Laboranalysen über einen Zustand oder eine Qualität zumindest der gefertigten Suspension (SP) erfasst werden,
**dass** in der Lernphase die ersten und die zweiten Parameter zum Trainieren eines Modells zur Vorhersage des Zustandes oder der Qualität mittels eines maschinellen Lernens verwendet werden,
**dass** zumindest außerhalb der Lernphase mittels der ersten Parameter und des trainierten Modells die Einrichtung (KM) zum Kugelmahlen gesteuert oder geregelt wird.

2. Verfahren nach Patentanspruch 1,
**dadurch gekennzeichnet,**
**dass** für das maschinelle Lernen ein Supervised-Lernen oder ein Reinforcement-Lernen verwendet wird.

3. Verfahren nach Patentanspruch 2,
**dadurch gekennzeichnet,**
**dass** im Falle des Reinforcement-Lernens eine Belohnungsfunktion verwendet, die auf eine Belohnung einer möglichst geringen Abweichung zwischen dem vorhergesagten und dem tatsächlichen Zustand oder Qualität zumindest der gefertigten Suspension (SP) gerichtet ist.

4. Verfahren nach einem der vorhergehenden Patentansprüche,
**dadurch gekennzeichnet,**
**dass** als einer der Prozessparameter ein Verschleißgrad der Mahlkugeln (MK) verwendet wird.

5. Verfahren nach Patentanspruch 4,
**dadurch gekennzeichnet,**
**dass** der Verschleißgrad aus einer Benutzungshistorie der Mahlkugeln (MK) errechnet wird.

6. Verfahren nach einem der vorhergehenden Patentansprüche,
**dadurch gekennzeichnet,**
**dass** als einer der Prozessparameter eine Rotationsgeschwindigkeit der Einrichtung (KM) zum Kugelmahlen verwendet wird.

7. Verfahren nach einem der vorhergehenden Patentansprüche,
**dadurch gekennzeichnet,**
**dass** als einer der Prozessparameter eine Energieaufnahme oder ein erforderliches Antriebsdrehmoment der Einrichtung (KM) zum Kugelmahlen verwendet wird.

8. Verfahren nach einem der vorhergehenden Patentansprüche,
**dadurch gekennzeichnet,**
**dass** als einer der Prozessparameter ein Kontextparameter aus der Einrichtung (KM) zum Kugelmahlen verwendet wird.

9. Verfahren nach Patentanspruch 8,
**dadurch gekennzeichnet,**
**dass** als der Kontextparameter Schallemissionen aus einer Mischkammer der Einrichtung (KM) zum Kugelmahlen verwendet werden.

10. Verfahren nach einem der vorhergehenden Patentansprüche,
**dadurch gekennzeichnet,**
**dass** als zweite Parameter auch Ergebnisse von Laboranalysen eines Zwischenproduktes (ZP) am Ausgang der Einrichtung (KM) zum Kugelmahlen verwendet werden.

11. Verfahren nach einem der vorhergehenden Patentansprüche,
**dadurch gekennzeichnet,**
**dass** als erste Parameter auch Werte von Zustandssensoren für ein Zwischenprodukt (ZP) am Ausgang der Einrichtung (KM) zum Kugelmahlen verwendet werden.

12. Verfahren nach einem der vorhergehenden Patentansprüche,
**dadurch gekennzeichnet,**
**dass** die Suspension (SP) durch die nachfolgende Verarbeitungseinheit (EX1), insbesondere durch einen Extruder, zu einem Rohling für eine Elektrode geformt wird.

13. Vorrichtung zur großtechnischen Herstellung einer Suspension (SP) für eine Batterie, insbesondere für einer Elektrode eines Lithium-Ionen-Akkus, in einer Fertigungsanlage,
wobei eine Einrichtung (KM) zum Kugelmahlen zur Verarbeitung zumindest eines Eingangsmaterials (EM) in zumindest einer mit Mahlkugeln (MK) versehenen rotierenden Kammer vorgesehen ist,
**dadurch gekennzeichnet,**
**dass** die Einrichtung (KM) zum Kugelmahlen zum Kugelmahlen als ein kontinuierlicher Prozess mit einer kontinuierlich gesteuerten Zugabe des zumindest einen Eingangsmaterials und mit einer kontinuierlich gesteuerten Abgabe des verarbeiteten Ausgangsmaterials (ZP) an eine nachfolgende Verarbeitungseinheit (EX1) eingerichtet ist,
**dass** erste Sensoren (S1) zur Erfassung von Zustandsparametern des Eingangsmaterials (EM) und einer Anzahl Prozessparameter der Fertigungsanlage als erste Parameter bei der Herstellung der Suspension (SP) vorgesehen sind,
**dass** zumindest in einer Lernphase zweite Sensoren (S2) und/oder zumindest eine Analyseeinrichtung zur Erfassung eines Zustandes oder Qualität zumindest der gefertigten Suspension (SP) vorgesehen sind,
**dass** eine Recheneinrichtung zum Trainieren eines Modells zur Vorhersage des Zustandes oder der Qualität mittels eines maschinellen Lernens anhand der ersten und der zweiten Parameter in der Lernphase vorgesehen ist, und
**dass** eine Steuerungseinrichtung vorgesehen ist, die zur Steuerung oder Regelung der Einrichtung (KM) zum Kugelmahlen mittels der ersten Parameter und des trainierten Modells zumindest außerhalb der Lernphase eingerichtet ist.

## Claims

1. Method for the industrial production of a suspension (SP) for a battery, in particular for an electrode of a lithium-ion battery, in a manufacturing plant,
wherein at least one input material (EM) is processed by means of ball milling in at least one rotating chamber, provided with milling balls (MK), of a facility (KM) for ball milling purposes and the raw material (ZP) is mixed with a number of other materials by means of a subsequent processing unit (EX1) and output,
**characterised in that**
the ball milling takes place as a continuous process with a continuously controlled addition of the at least one input material (EM) and with a continuously controlled discharge of the processed raw material (ZP) to a subsequent processing unit (EX1),
during the manufacture of the suspension (SP), state parameters of the input material (EM) and a number of process parameters of the manufacturing plant are detected as first parameters,
at least in a learning phase during the manufacture, results of laboratory analyses regarding a state or a quality of at least the manufactured suspension (SP) are detected as second parameters,
in the learning phase, the first and the second parameters are used to train a model in order to predict the state and/or quality by means of a machine learning method,
the facility (KM) for ball milling is controlled or regulated at least outside of the learning phase by means of the first parameters and the trained model.

2. Method according to claim 1,
**characterised in that**
a supervised learning or a reinforcement learning is used for the machine learning.

3. Method according to claim 2,
**characterised in that**
in the case of the reinforcement learning, a reward function is used which is directed at a reward of as minimal a deviation as possible between the predicted and the actual state or quality of at least the manufactured suspension (SP).

4. Method according to one of the preceding claims, **characterised in that**
a degree of wear of the milling balls (MK) is used as one of the process parameters.

5. Method according to claim 4,
**characterised in that**
the degree of wear is calculated from a usage history of the milling balls (MK).

6. Method according to one of the preceding claims, **characterised in that**
a rotation speed of the facility (KM) for ball milling is used as one of the process parameters.

7. Method according to one of the preceding claims, **characterised in that**
an energy consumption or a required drive torque of the facility (KM) for ball milling is used as one of the process parameters.

8. Method according to one of the preceding claims, **characterised in that**
a context parameter from the facility (KM) for ball milling is used as one of the process parameters.

9. Method according to claim 8,
**characterised in that**
sound emissions from a mixing chamber of the facility (KM) for ball milling are used as the context parameters.

10. Method according to one of the preceding claims, **characterised in that**
results of laboratory analyses of an intermediate product (ZP) at the output of the facility (KM) for ball milling are used as the second parameters.

11. Method according to one of the preceding claims, **characterised in that**
values of state sensors for an intermediate product (ZP) at the output of the facility (KM) for ball billing are also used as first parameters.

12. Method according to one of the preceding claims, **characterised in that**
the suspension (SP) is shaped by the subsequent processing unit (EX1), in particular by an extruder, to form a blank for an electrode.

13. Device for the industrial production of a suspension (SP) for a battery, in particular for an electrode of a lithium-ion battery, in a manufacturing plant,
wherein a facility (KM) for ball milling is provided for processing at least one input material (EM) in at least one rotating chamber provided with milling balls (MK),
**characterised in that**
the facility (KM) for ball milling is set up for ball milling as a continuous process with a continuously controlled addition of the at least one input material and with a continuously controlled discharge of the processed raw material (ZP) to a subsequent processing unit (EX1),
first sensors (S1) for detecting state parameters of the input material (EM) and a number of process parameters of the manufacturing plant are provided as first parameters during the manufacture of the suspension (SP),
at least in a learning phase, second sensors (S2) and/or at least an analysis facility for detecting a state or quality of at least the manufactured suspension (SP) are provided,
a computing facility is provided to train a model in order to predict the state or the quality by means of a machine learning on the basis of the first and the second parameters in the learning phase, and
a control facility is provided, which is set up to control or regulate the facility (KM) for ball milling by means of the first parameters and the trained model at least outside of the learning phase.

## Revendications

1. Procédé de production à l'échelle industrielle d'une suspension (SP) pour une batterie, en particulier pour une électrode d'un accumulateur lithium-ion, dans une installation de fabrication,
dans lequel on traite au moins une matière (EM) d'entrée au moyen d'un broyage à boulets, dans au moins une chambre tournante, pourvue de boulets (MK) de broyage d'un dispositif (KM) de broyage à boulets et on mélange la matière (ZP) de sortie au moyen d'une unité (EX1) de traitement suivante à un certain nombre d'autres matières et on la sort,
caractérisé
en ce le broyage à boulets s'effectue sous la forme d'une opération continue avec un apport commandé de manière continue de la au moins une matière (EM) d'entrée et avec un envoi commandé de manière continue de la matière (ZP) de sortie traitée à une unité (EX1) de traitement suivante,
en ce que, lors de la production de la suspension (SP), on détecte, comme premier paramètre, un paramètre d'état de la matière (EM) d'entrée et un certain nombre de paramètres opératoires de l'installation de fabrication,
en ce qu'au moins, dans une phase d'enseignement, lors de la production, on détecte, comme deuxième paramètre, des résultats d'analyse de laboratoire sur un état ou une qualité d'au moins la suspension (SP) finie,
en ce que, dans la phase d'enseignement, on utilise les premiers et les deuxièmes paramètres pour faire l'apprentissage d'un modèle de prévision de l'état ou de la qualité au moyen d'un enseignement automatique,
en ce qu'au moins en dehors de la phase d'enseignement, on commande ou on règle au moyen des premiers paramètres et du modèle d'apprentissage le dispositif (KM) de broyage à boulets.

2. Procédé suivant la revendication 1,
**caractérisé**
**en ce que**, pour l'enseignement automatique, on utilise un enseignement supervisé ou un enseignement par renforcement.

3. Procédé suivant la revendication 2,
**caractérisé**
**en ce que**, dans le cas de l'enseignement par renforcement, est utilisée une fonction de rétribution, qui vise à rétribuer un écart le plus petit possible entre l'état ou la qualité prévu et réel au moins de la suspension (SP) finie.

4. Procédé suivant l'une des revendications précédentes, **caractérisé**
**en ce que** l'on utilise, comme l'un des paramètres opératoires, un degré d'usure des boulets (MK) de broyage.

5. Procédé suivant la revendication 4,
**caractérisé**
**en ce que** l'on calcule le degré d'usure à partir d'un historique d'utilisation des boulets (MK) de broyage.

6. Procédé suivant l'une des revendications précédentes, **caractérisé**
**en ce que** l'on utilise, comme l'un des paramètres opératoires, une vitesse de rotation du dispositif (KM) de broyage à boulets.

7. Procédé suivant l'une des revendications précédentes, **caractérisé**
**en ce que** l'on utilise, comme l'un des paramètres opératoires, une absorption d'énergie ou un couple d'entraînement nécessaire du dispositif (KM) de broyage à boulets.

8. Procédé suivant l'une des revendications précédentes, **caractérisé**
**en ce qu'**on utilise, comme l'un des paramètres opératoires, un paramètre de contexte provenant du dispositif (KM) de broyage à boulets.

9. Procédé suivant la revendication 8,
**caractérisé**
**en ce que** l'on utilise, comme paramètre de contexte, des émissions de son provenant d'une chambre de mélange du dispositif (KM) de broyage à boulets.

10. Procédé suivant l'une des revendications précédentes, **caractérisé**
**en ce que** l'on utilise, comme deuxième paramètre, également des résultats de laboratoire d'un produit (ZP) intermédiaire à la sortie du dispositif (KM) de broyage à boulets.

11. Procédé suivant l'une des revendications précédentes, **caractérisé**
**en ce que** l'on utilise, comme premier paramètre, également des valeurs de capteurs d'état d'un produit (ZP) intermédiaire à la sortie du dispositif (KM) de broyage à boulets.

12. Procédé suivant l'une des revendications précédentes, **caractérisé**
**en ce que** l'on forme en une ébauche d'une électrode la suspension (SP) par l'unité (EX1) de traitement suivante, en particulier par une extrudeuse.

13. Equipement de production à l'échelle industrielle d'une suspension (SP) pour une batterie, en particulier pour une électrode d'un accumulateur lithium-ion dans une installation de fabrication,
dans lequel il est prévu un dispositif (KM) de broyage à boulets pour le traitement d'au moins une matière (EM) d'entrée dans au moins une chambre tournante pourvue de boulets (MK) de broyage,
**caractérisé**
**en ce que** le dispositif (KM) de broyage à boulets est agencé pour le broyage à boulets sous la forme d'une opération continue avec un apport commandé de manière continue de la au moins une matière d'entrée et avec un envoi commandé de manière continue de la matière (ZP) de sortie traitée à une unité (EX1) de traitement suivante,
**en ce qu'**il est prévu des premiers capteurs (S1) de détection de paramètres d'état de la matière (EM) d'entrée et d'un certain nombre de paramètres opératoires de l'installation de fabrication, comme premier paramètre, lors de la production de la suspension (SP),
**en ce que**, au moins dans une phase d'enseignement, il est prévu des deuxièmes capteurs (S2) et/ou au moins un dispositif d'analyse pour la détection d'un état ou d'une qualité d'au moins la suspension (SP) finie,
**en ce qu'**il est prévu un dispositif informatique d'apprentissage d'un modèle de prévision de l'état ou de la qualité au moyen d'un enseignement automatique à l'aide des premiers et des deuxièmes paramètres de la phase d'enseignement, et
**en ce qu'**il prévu un dispositif de commande, qui est agencé pour la commande ou le réglage du dispositif (KM) de broyage à boulets au moyen des premiers paramètres et du modèle d'apprentissage au moins en dehors de la phase d'enseignement.
